# EUROPÄISCHE PATENTSCHRIFT

(11) **EP 1 755 235 B1**
(45) Veröffentlichungstag und Bekanntmachung des Hinweises auf die Patenterteilung: **12.09.2018**
(21) Anmeldenummer: 06117840.6
(22) Anmeldetag: 26.07.2006
(51) Int. Cl.: H04B 7/08

(54) **Rundfunkempfänger mit einer Mehrantennenverarbeitungseinrichtung und Verfahren zum Betrieb eines Rundfunkempfängers**
Broadcast receiver with multi-antenna processing apparatus and method of operating a broadcast receiver
Récepteur de radiodiffusion avec dispositif de traitement à antennes multiples et procédé d'opérer un récepteur de radiodiffusion

(30) Priorität: 18.08.2005 DE 102005039102
(43) Veröffentlichungstag der Anmeldung: 21.02.2007
(73) Patentinhaber: ROBERT BOSCH GMBH, 70442 Stuttgart (DE)
(72) Erfinder: Jandel, Peter, 31139 Hildesheim (DE); Tran, Manh-Thang, 31135, Hildesheim (DE); Risse, Marcus, 31139 Hildesheim (DE)

(56) Entgegenhaltungen:
- EP-A1- 1 206 050
- EP-A2- 0 961 419
- EP-A2- 1 408 625
- WO-A1-02/078214

## Beschreibung

### Stand der Technik

Die Erfindung betrifft einen Funkempfänger, insbesondere Rundfunkempfänger, und ein Verfahren zum Betrieb eines Funkempfängers nach der Gattung der nebengeordneten Ansprüche. Aus der Druckschrift WO 02/078214 A1 ist ein Verfahren und eine Vorrichtung zur Unterdrückung von Multipath-Störungen bei einem Empfänger für elektromagnetische Wellen bekannt, wobei aus mindestens zwei Antennensignalen ein neues Signal generiert wird und wobei ein erstes Antennensignal der Erzeugung eines Wiedergabesignals zugrunde gelegt wird, wenn die Signalqualität des ersten Antennensignals oberhalb einer definierten Schwelle für den ungestörten Empfang liegt, und wobei das aus mindestens zwei Antennensignalen generierte neue Signal für die Erzeugung des Wiedergabesignals zugrunde gelegt wird, wenn die Signalqualität des ersten Antennensignals unter diese Schwelle absinkt. Weiterhin sind generell sogenannte adaptive (beispielsweise unter der Bezeichnung "Digital Directional Antenna" bekannte) Mehrantennensysteme bekannt, wobei durch die Kombination mehrerer Antennensignale eine Richtwirkung erzielt wird, die eine deutliche Verbesserung der Empfangsqualität im Vergleich zu herkömmlichen Systemen hervorruft. Nachteilig bei solchen Systemen ist jedoch, dass verbleibende Reststörungen, insbesondere aufgrund ihrer geringen Häufigkeit, von einem Hörer als besonders störend empfunden werden, da es sich in der Regel um wenige kurze jedoch harte Störungen handelt, die ein solcher Empfänger oft stereophon und mit voller Audiosignalbandbreite wiedergibt.

### Vorteile der Erfindung

Gegenstand der Erfindung ist ein Rundfunkempfänger gemäß Patentanspruch 1 und ein Verfahren gemäß Patentanspruch 6. Der erfindungsgemäße Funkempfänger und das erfindungsgemäße Verfahren zum Betrieb eines Funkempfängers mit den Merkmalen der nebengeordneten Ansprüche hat dem gegenüber den Vorteil, dass im Vergleich zu herkömmlichen adaptiven Mehrantennensystemen verbleibende Reststörungen von einem Hörer entweder überhaupt nicht wahrgenommen werden oder zumindest als nicht besonders störend wahrgenommen werden. Dies ist erfindungsgemäß trotz der Tatsache der Fall, dass die Empfangsbedingungen zumindest zeitlich begrenzt, etwa in einem sich bewegenden Kraftfahrzeug, vergleichsweise schlecht sind, beispielsweise durch Mehrwegempfang oder dergleichen. Gemäß der Erfindung wird ein Ausgangsignal, welches im folgenden auch als ein Wiedergabesignal bezeichnet wird, in Abhängigkeit sowohl von ersten Signalqualitätsdaten des Mehrantennensignals als auch in Abhängigkeit eines Steuersignals adaptiv geändert bzw. beeinflusst. Das Steuersignal wird entweder ausgehend von zweiten Signalqualitätsdaten oder ausgehend von dritten Signalqualitätsdaten gebildet, wobei die zweiten Signalqualitätsdaten ausgehend von einem von einer ersten Antenne empfangenen ersten Signal und die dritten Signalqualitätsdaten ausgehend von einem von einer zweiten Antenne empfangenen zweiten Signal gebildet werden. Hierdurch wird eine parallele Detektion von Empfangsqualitätsinformationen bzw. Signalqualitätsdaten in einem Signalpfad ohne adaptive Empfangsverbesserungseinrichtung (d. h. vergleichbar mit einem konventionellen Empfänger) realisiert, um die Eigenschaften des Hörpfades, welcher mit einer adaptiven Empfangsverbesserungseinrichtung ausgestattet ist, zu konfigurieren bzw. dynamisch zu beeinflussen. Besonders bevorzugt ist es erfindungsgemäß, dass der Funkempfänger eine Auswerteeinrichtung zur Bildung des Steuersignals in Abhängigkeit der zweiten Signalqualitätsdaten oder in Abhängigkeit der dritten Signalqualitätsdaten aufweist. Hierdurch ist es beispielsweise erfindungsgemäß vorteilhaft möglich, dass einerseits verschiedene Signale zur Erzeugung des Steuersignals vorhanden sind, so dass das Steuersignal eine besonders genaue und eine auf die jeweilige Empfangssituation mit vergleichsweise schlechten Empfangsbedingungen abgestimmte Reaktion des adaptiven Systems erlaubt. Trotzdem ist es erfindungsgemäß möglich, einen solchen Funkempfänger bzw. Empfänger vergleichsweise einfach und kostengünstig aufzubauen, so dass beispielsweise lediglich eine Auswerteeinrichtung zusätzlich zur Wiedergabeverbesserungseinrichtung erforderlich ist. Erfindungsgemäß ist ferner bevorzugt, dass die ersten Signalqualitätsdaten, die zweiten Signalqualitätsdaten, die dritten Signalqualitätsdaten jeweils Qualitätsdaten hinsichtlich der Empfangsfeldstärke und/oder des Modulationshubs und/oder von Nachbarkanalstörugnen oder von Gleichkanalstörungen und von Mehrwegeempfangsstörungen umfassen. Hierdurch ist es möglich, dass das empfangene Signal bzw. die empfangenen Signale auf alle wesentlichen auftretenden Störungsquellen hin untersucht werden und so die Wahrscheinlichkeit von für einen Hörer bzw. Benutzer des Funkempfängers hörbaren bzw. bemerkbaren Beeinträchtigungen des Signals vergleichsweise gering ist. Erfindungsgemäß ist ferner bevorzugt, dass die Wiedergabeverbesserungseinrichtung eine erste Detektionseinheit zur Detektion der ersten Signalqualitätsdaten aufweist und das die Auswerteeinrichtung eine zweite Detektionseinheit zur Detektion der zweiten oder dritten Signalqualitätsdaten aufweist. Hierdurch ist es besonderes einfach möglich, dass das durch den Hörpfad bzw. durch die Wiedergabeverbesserungseinrichtung laufende Signal in gleicher oder analoger Weise analysiert wird und Signalstörungen detektiert werden, wie das erste oder zweite Signal, welches durch die Auswerteeinrichtung läuft. Es ist hierdurch zum einen möglich, den Funkempfänger mit einer höheren Anzahl von Gleichteilen zu produzieren, was eine kostengünstigere Produktion des Funkempfängers ermöglicht oder aber es wird erfindungsgemäß ermöglicht, dass Software zur Detektion von Signalstörungen sowohl in der Wiedergabeverbesserungseinrichtung als auch in dem zur ihr parallelen Signalpfad Verwendung findet. Es ist bei einer entsprechend großen Leistungsfähigkeit eines der Detektionseinheit zugeordneten Bauelements (Hardware) bzw. Teil eines Bauelements (beispielsweise Prozessor) auch möglich, dass die Funktionalität der ersten und zweiten Detektionseinheit quasi im Multiplexbetrieb von einem einzigen Bauelement bzw. Teil eines Bauelements ausgeführt wird.

Erfindungsgemäß ist es ferner von Vorteil, dass der Funkempfänger einen Schalter umfasst, wobei mittels des Schalters eine Umschaltung zwischen einer Auswertung des ersten Signals oder des zweiten Signals durch die Auswerteeinrichtung vorgesehen ist. Hierdurch ist es erfindungsgemäß vorteilhaft möglich, sowohl das von der ersten Antenne gelieferte erste Signal als auch das von der zweiten Antenne gelieferte zweite Signal für die Beurteilung von Störwahrscheinlichkeiten der Wiedergabeverbesserungseinrichtung heranzuziehen.

Erfindungsgemäß ist es ferner bevorzugt, dass der Funkempfänger wenigstens ein Analogdigitalwandler aufweist, so dass das erste und das zweite Signal ein digitalisertes Signal ist. Hierdurch ist es mit Hilfe von digitalen Signalprozessoren möglich, eine genaue und möglichst fehlerfreie Bearbeitung bzw. Beinflussung bzw. Korrektur von Signalen zu ermöglichen und zum anderen ist es dadurch überhaupt erst möglich, eine zuverlässige Detektion von Signalstörungen durchzuführen.

Ein weiterer Gegenstand der vorliegenden Erfindung ist ein Verfahren zum Betrieb eines erfindungsgemäßen Funkempfängers, wobei mittels der Wiedergabeverbesserungseinrichtung das Ausgangssignal durch eine Signalbeeinflussung des Mehrantennensignals gebildet wird. Es ist hierdurch erfindungsgemäß möglich, dass das Ausgangssignal des Funkempfängers ein hohes Maß an Störunterdrückung aufweist. Es ist weiterhin bevorzugt, dass die Signalbeeinflussung des Mehrantennensignals in Abhängigkeit eines Auswertesignals der ersten Detektionseinheit geändert wird. Hierdurch ist es möglich mit einfachen Mitteln eine Signalbeeinflussung herbeizuführen. Ferner ist bevorzugt, dass das Auswertesignal der ersten Detektionseinheit in Abhängigkeit des Steuersignals geändert wird. Hierdurch kann in besonders wirkungsvoller Weise erfindungsgemäß in den Betrieb der Wiedergabeverbesserungseinrichtung eingriffen werden, wenn auf dem zum Empfangspfad bzw. Hörpfad parallelen Signalpfad eine besonders schwierige Empfangssituation festgestellt wird. Weiterhin ist bevorzugt, dass die Signalbeeinflussung des Mehrantennensignals direkt in Abhängigkeit des Steuersignals geändert wird. Dies ist beispielsweise vorteilhaft zur Einstellung bzw. Änderung von Zeitkonstanten, im Rahmen derer der Betrieb des Funkempfängers zu einem normalen Verhalten zurückkehrt, vorausgesetzt dass sich auch die Empfangsverhältnisse normalisieren.

### Zeichnungen

Ein Ausführungsbeispiel der Erfindung ist in der Zeichnung dargestellt und in der nachfolgenden Beschreibung näher erläutert.

Es zeigen
Figur 1 ein schematisches Blockschaltbild eines erfindungsgemäßen Funkempfängers und
Figur 2 ein schematischer Verfahrensablauf des erfindungsgemäßen Verfahrens zum Betrieb eines Funkempfängers.

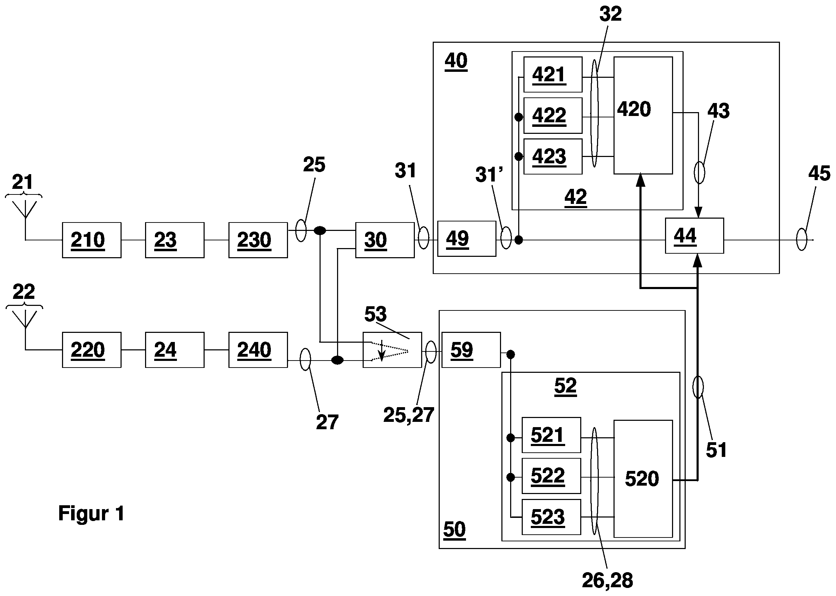

In Figur 1 ist schematisch ein Blockschaltbild eines erfindungsgemäßen Funkempfängers 10 dargestellt. Bei dem Funkempfänger 10 handelt es sich erfindungsgemäß insbesondere um ein Rundfunkempfänger zur Benutzung insbesondere in einem Fahrzeug (nicht dargestellt), der insbesondere zum Empfang von frequenzmodulierten elektromagnetischen Wellen, insbesondere UKW-Funksignale, besonders geeignet ist.
Dem Funkempfänger 10 ist wenigstens eine erste Antenne 21 und eine zweite Antenne 22 zugeordnet, wobei sich die Antennen 21, 22 beispielsweise in einer Heckscheibe des Fahrzeugs oder an anderen Stellen des Fahrzeugs befinden können, so dass aus deren gemeinsamer Verarbeitung ein möglichst störungsfreies Ausgangssignal bzw.
Wiedergabesignal 45 erzeugt werden kann bzw. so dass aus deren gemeinsamer Verarbeitung möglichst gut eine Richtcharakteristik beider Antennen 21, 22 auswertbar ist. Der erfindungsgemäße Funkempfänger 10 weist hierzu im Anschluss an die erste Antenne 21 eine Hochfrequenzvorstufe 210 und nachfolgend einen Analogdigitalwandler 23 auf, wobei nachfolgend an den Analogdigitalwandler 23 das von der ersten Antenne 21 ausgehende Signal einer Signalverarbeitungseinheit 230 zugeführt wird, insbesondere in Form eines digitalen Filters. Am Ausgang der Signalverarbeitungseinheit 230 steht ein von der ersten Antenne 21 ausgehendes bzw. von dieser abgeleitetes erstes Signal 25 an.
In zum Signalast der ersten Antenne 21 analoger Weise wird ein von der zweiten Antenne 22 empfangenes Signal einer zweiten Hochfrequenzvorstufe 220 zugeführt, die ihrerseits das Signal einem weiteren Analogdigitalwandler 24 zuführt, welcher seinerseits das Signal einer weiteren Signalverarbeitungseinheit 240 zuführt, welche ebenfalls insbesondere als ein digitales Filter vorgesehen ist. Am Ausgang der weiteren Signalverarbeitung 240 steht ein von der zweiten Antenne 22 ausgehendes bzw. von dieser abgeleitetes zweites Signal 27 zur Verfügung. Die Hochfrequenzvorstufen 210, 220 sind in aus dem Stand der Technik bekannter Weise insbesondere zur Erzeugung eines analogen Zwischenfrequenzsignals (ZF) vorgesehen. Die Signalverarbeitungseinheiten 230, 240, welche erfindungsgemäß insbesondere ein digitales Filter umfassen, sind ebenfalls aus dem Stand der Technik bekannt und dienen beispielsweise der Unterdrückung von Nachbarkanälen.

Am Ausgang der Signalverarbeitungseinheiten 230, 240 wird in der beispielhaften Anordnung des in der Figur schematisch dargestellten Funkempfängers 10 sowohl das erste Signal 25 als auch das zweite Signal 27 einer Mehrantennenverarbeitungseinrichtung 30 und einem Schalter 53 zugeführt. Die Mehrantennenverarbeitungseinrichtung 30 erzeugt aus dem ersten und zweiten Signal 25, 27 ein Mehrantennensignal 31, welches einer Wiedergabeverbesserungseinrichtung 40 zur Erzeugung des Ausgangssignals 45 zugeführt wird. In der Wiedergabeverbesserungseinrichtung 40 wird das Mehrantennensignal im Beispiel des Empfängers der Figur 1 zunächst in einem Demodulator 49 demoduliert und liegt dann als sogenanntes demoduliertes Mehrantennensignal 31' am Ausgang des Demodulators 49 vor. Die Mehrantennenverarbeitungseinrichtung wird im Kontext der vorliegenden Erfindung auch als Empfangsverbesserungseinrichtung bezeichnet. Im folgenden wird das Mehrantennensignal 31 und das demodulierte Mehrantennensignal 31' im wesentlichen synonym verwendet, weil es sich hinsichtlich seines Informationsinhalts im wesentlichen (bis auf eine Demodulationstransformation) um das gleiche Signal handelt.

Die Mehrantennenverarbeitungseinrichtung 30 generiert aus dem ersten Signal 25 und dem zweiten Signal 27 ein neues Signal, wobei insbesondere aufgrund der unterschiedlichen Phasenlage von den Antennen 21, 22 empfangenen Signale eine Richtcharakteristik in dem Mehrantennensignal 31 zugänglich bzw. auswertbar ist, so dass selbst bei schwierigen Empfangsverhältnissen die maximal mögliche Information aus dem empfangenen Signal extrahiert werden kann. Die Mehrantennenverarbeitungseinrichtung 30 kombiniert das erste Signal 25 und das zweite Signal 27 im Sinne eines bestmöglichen Empfangs optimierten Signals unter Auswertung sowohl der Signalanteile des ersten und zweiten Signals 25, 27 als auch unter Auswertung von deren Unterschieden, insbesondere unterschiedliche Phasenlage.

Innerhalb der Wiedergabeverbesserungseinrichtung 40 wird das Mehrantennensignal 31 bzw. das demodulierte Mehrantennensignal 31' einerseits einer Signalbeeinflussungeinheit 44 zugeführt als auch einer ersten Detektionseinheit 42 zugeführt. Die erste Detektionseinheit 42 weist erfindungsgemäß insbesondere eine Mehrzahl von Signalstörungsdetektoren 421, 422, 423 auf, welche jeweils Ausgangssignale an eine erste Auswerteeinheit 420 leiten. Die erste Auswerteeinheit 420 innerhalb der ersten Detektionseinheit 42 generiert aus den verschiedenen Signalen der Signalstörungdetektoren 421, 422, 423 ein Auswertesignal 43 zur Weiterleitung an die Signalbeeinflussungeinheit 44, um das Mehrantennensignal 31 bzw. das demodulierte Mehrantennensignal 31' entsprechend der detektierten Signalstörungen zu korrigieren bzw. zu beeinflussen. Hierdurch ist das Ausgangssignal 45 möglichst störungsarm und für einen Benutzer des erfindungsgemäßen Funkempfängers 10 in guter Qualität genießbar ist. Die von den Signalstörungsdetektoren 421, 422, 423 an die Auswerteeinheit 420 der ersten Detektionseinheit 42 weitergeleiteten Signale werden erfindungsgemäß auch als erste Signalqualitätsdaten 32 bezeichnet, die die Signalqualität des Mehrantennensignals 31 bzw. des demodulierten Mehrantennensignals 31' charakterisieren. Erfindungsgemäß sind eine Mehrzahl von Signalstörungdetektoren vorgesehen wobei die Signalstörungdetektoren 421, 422, 423 lediglich beispielhaft angegeben sind. Beispielsweise ist es erfindungsgemäß vorgesehen, jeweils einen Signalstörungsdetektor 421, 422, 423 zur Detektion der Empfangsfeldstärke, zur Detektion des Modulationshubs, zur Detektion von Nachbarkanalstörungen, zur Detektion von Gleichkanalstörungen und/oder zur Detektion von Mehrwegeempfangsstörungen in die erste Detektionseinheit 42 zu integrieren.

Parallel zu diesem, die Wiedergabeverbesserungseinrichtung 40 aufweisenden und das Ausgabesignal 45 generierenden Empfangspfad (Hörpfad) gibt es einen weiteren Empfangspfad, der wahlweise (aufgrund der Schalterstellung eines Schalters 53) den weiteren Empfangspfad mit dem ersten Signal 25 oder mit dem zweiten Signal 27 beaufschlagt. Im weiteren Empfangspfad wird das erste Signal 25 bzw. das zweite Signal 27 ebenfalls empfangen und demoduliert. Ob dieser weitere Empfangspfad das erste Signal 25 oder das zweite Signal 27 empfängt, wird mittels der Schalterstellung des Schalters 53 definiert, welcher das ausgewählte Signal (aus dem ersten Signal 25 und dem zweiten Signal 27) einer Auswerteeinrichtung 50 zur Verfiigung stellt. Innerhalb der Auswerteeinrichtung 50 ist wiederum insbesondere ein weiterer Demodulator 59 vorgesehen, der das erste bzw. das zweite Signal 25, 27 demoduliert. Die Auswerteeinrichtung 51 umfasst eine zweite Detektionseinheit 52. Die zweite Detektionseinheit 52 weist insbesondere ihrerseits Signalstörungsdetektoren 521, 522, 523 auf, welche ihre Ausgangssignale als zweite Signalqualitätsdaten 26 (falls es sich bei dem verarbeiteten Signal um das erste Signal 25 handelt) oder dritte Signalqualitätsdaten 28 (falls es sich bei dem verarbeiteten Signal um das zweite Signal 27 handelt) an eine zweite Auswerteeinheit 520 weiterleiten. In der zweiten Auswerteeinheit 520 bzw. in der zweiten Detektionseinheit 52 wird ein Steuersignal 51 generiert, welches direkt der Signalbeeinflussungeinheit 44 der Wiedergabeverbesserungseinrichtung 40 zur Verfügung gestellt werden kann und/oder welches der ersten Auswerteeinheit 420 der ersten Detektionseinheit 42 zur Verfügung gestellt werden kann. In jedem Fall wird mittels des Steuersignals 51, insbesondere für den Fall besonders schlechter Empfangssituationen, einen Einfluss auf die Verarbeitung in der Wiedergabeverbesserungseinrichtung 40 bzw. auf deren Konfiguration genommen.

Die Auswahl, welches der beiden Antennensignale, d. h. das erste Signal 25 oder das zweite Signal 27 der Auswerteeinrichtung 50 zur Verfügung gestellt wird, kann beispielsweise periodisch erfolgen, d. h. die Hälfte der Zeit wird das erste Signal 25 und für die verbleibende Zeit wird das zweite Signal 27 weiterverarbeitet. Die Auswahl der Antennen 21, 22 kann aber auch durch andere Kriterien, wie z. B. die Empfangsqualität der Signale der jeweiligen Antenne 21, 22 oder auch der Empfangseigenschaften wie z. B. die Richtwirkungen der Antenne oder dergleichen erfolgen. Insbesondere ist es erfindungsgemäß auch möglich, dass in dem erfindungsgemäßen Funkempfänger in einer Speichereinheit eine Wahrscheinlichkeit dafür abgelegt wird, ob die erste oder die zweite Antenne 21, 22 einen besseren Empfang realisiert, beispielsweise ausgehend von Erfahrungswerten, die in aufgrund eines vorhergehenden Betriebs des Funkempfängers gesammelt wurden.

Der erfindungsgemäße Funkempfänger 10 funktioniert beispielsweise folgendermaßen: Falls in der Auswerteeinrichtung 50 beispielsweise Empfangsstörungen durch Mehrwegeempfang detektiert werden, die eine gewisse Schwelle überschreiten, so ist erfahrungsgemäß die Wahrscheinlichkeit erhöht, dass im Hörsignalpfad, d. h. im Signalpfad der Wiedergabeverbesserungseinrichtung 40, trotz der Empfangsverbesserung durch die dort durchgeführte adaptive Signalbeeinflussung durch die adaptive Mehrantennenverarbeitungseinrichtung, Reststörungen hörbar werden können. Um die Wahrnehmbarkeit solcher Reststörungen zu reduzieren bzw. um die Wahrscheinlichkeit des Auftretens solcher Reststörungen zu reduzieren, wird nun auf die Verarbeitung der Signalbeeinflussung in der Wiedergabeverbesserungseinrichtung 40 bzw. insbesondere in der ersten Detektionseinheit 42 Einfluss genommen.

Beispielsweise wird die Gewichtung desjenigen der Signalstörungsdetektoren 421, 422, 423 der als Mehrwegedetektor ausgebildet ist, in der ersten Detektionseinheit 42 erhöht, um bereits früher eine Beeinflussungsreaktion in dem Auswertesignal 43 der ersten Detektioneinheit 42 zu erzielen. Eine solche Veränderung der Gewichtung der Signalsstörungsdetektoren 421, 422, 423 wird wieder auf den Normalzustand zurück gestellt, wenn das Ergebnis der Detektion in einem entsprechenden Signalstörungsdetektor 521, 522, 523 in der zweiten Detektionseinheit 52 eine bestimmte Schwelle unterschreitet. Die Schwelle zum Ansprechen ist in der Regel höher als die Schwelle zum Zurücksetzen, was der Realisierung eines Hystereseverhaltens gleichkommt. Entsprechend bzw. parallel zu den Auswertungen bzw. Anpassungsreaktionen des Mehrwegedetektors innerhalb der Signalstörungsdetektoren 421, 422, 423 bzw. 521, 522, 523 der ersten bzw. zweiten Detektionseinheit 42, 52 wird im dargestellten Beispiel eines Empfängers auch ein Nachbarkanaldetektor ausgewertet. Bei Überschreiten einer bestimmten Schwelle des damit korrespondierenden Detektorausgangssignals (innerhalb der zweiten bzw. dritten Signalqualitätsdaten 26, 28) in der zweiten Detektionseinheit 52 wird (durch eine Änderung des Steuersignals 51) die Gewichtung des Nachbarkanaldetektors in der ersten Detektionseinheit 42 erhöht, um eine empfindlichere Detektion zu erreichen. Das Zurückschalten auf den Normalzustand erfolgt beispielhaft ebenfalls mittels einem Hystereseverhalten.

Zusätzlich zu der Erhöhung oder Verringerung der Detektorgewichtung werden im Hörsignalpfad Schwellenwerte und Zeitkonstanten, beispielsweise hinsichtlich der Kanaltrennungsüberblendung, der Audiobandbreitensteuerung (High Cut) und der Lautstärkesteuerung des Audiosignals derart geändert, dass bereits eine geringere Störung zu einer Reaktion führt und dass die eingeleitete Reaktion schneller und länger anhaltend erfolgt als in der Normalstellung. Die Modifikation dieser Schwellen und Zeitkonstanten wird unabhängig von der Art der detektierten Empfangsstörung immer eingeleitet und über ein Hystereseverhalten erst wieder zurückgenommen, wenn alle Signalqualitätsdetektoren die Unterschreitung bestimmter Störschwellen des überwachten Signals gemeldet haben. Diese Beeinflussung der Signalbeeinflussungeinheit 44 durch die Auswerteeinrichtung 50 ist in Figur 1 mittels der Verbindung des Ausgangs der Auswerteeinrichtung 50 zur Signalbeeinflussungeinheit 44 dargestellt. Es ist daher erfindungsgemäß vorgesehen, dass die Auswerteeinrichtung 50 sowohl direkten Einfluss auf die Signalbeeinflussungeinheit 44 des Mehrantennensignals 31 bzw. des demodulierten Mehrantennensignals 31' ausübt als auch indirekt über die Verschiebung der Ansprechschwellen verschiedener Signalstörungsdetektoren 421, 422, 423 der ersten Detektionseinheit 42, welche ihrerseits zur einer Veränderung des Auswertesignals 43 und damit zu einer Beeinflussung des Ausgangssignals 45 führen.

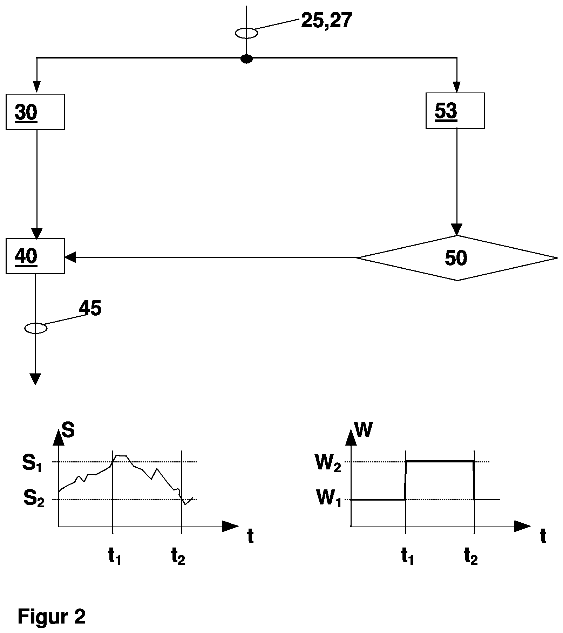

In Figur 2 ist schematisch der Verfahrensablauf des erfindungsgemäßen Verfahrens zum Betrieb des Funkempfängers 10 dargestellt. Ausgehend von dem ersten und zweiten Signal 25, 27, welche der Mehrantennenverarbeitungseinrichtung 30 sowie dem Schalter 53 zur Verfügung gestellt werden, wird mittels des Mehrantennensignals 31 bzw. des demodulierten Mehrantennensignals 31' innerhalb der Wiedergabeverbesserungseinrichtung 40 das Ausgangssignal 45 unter Beeinflussung des Mehrantennensignals 31 bzw. des demodulierten Mehrantennensignals 31' erzeugt. Hierbei wird das Mehrantennensignal 31' durch die mittels der Auswerteeinrichtung 50 detektierten Signalstörungen beeinflusst. Diese Signalbeeinflussung wird in der Signalbeeinflussungeinheit 44 durchgeführt. Die Auswerteeinrichtung 50 ist in Figur 2 schematisch nach der Art eines Flussdiagramms als Entscheidung dargestellt, weil erfindungsgemäß mittels der Auswerteeinrichtung 50 entschieden wird, ob die Wiedergabeverbesserungseinrichtung 40 in einem Normalmodus (mit geringerer Empfindlichkeit auf Signalstörungen und bei vergleichsweise guten Empfangsbedingungen) oder in einem empfindlicheren Modus (mit höherer Empfindlichkeit auf Signalstörungen und bei vergleichsweise schlechten Empfangsbedingungen) betrieben wird. Im unteren Teil der Figur 2 sind nebeneinander angeordnet ein erster zeitlicher Verlauf (linke Seite) eines Fehlersignals bzw. eines Störungssignals S, welches in der Auswerteeinrichtung 50 detektiert wird, und ein zweiter zeitlicher Verlauf (rechte Seite) eines Reaktionswertes W zur Beschreibung des Verhaltens der Wiedergabeverbesserungseinrichtung 40 dargestellt. Der zeitlicher Verlauf der Signalstörung ist mit dem Buchstaben S bezeichnet währendem der zeitliche Verlauf der Reaktionsbeeinflussung bzw. des Schwellwertes mit dem Buchstaben W bezeichnet ist. Es wird zum Startzeitpunkt vorausgesetzt, dass sich die Signalstörung S in einem Normbereich befindet, d. h. unterhalb einer ersten Reaktionsschwelle S₁. Zu einem Zeitpunkt t₁ wird die Empfangssituation im dargestellten Beispiel derart schlecht, dass das Störungssignal die Reaktionsschwelle S₁ überschreitet. Zu diesem Zeitpunkt (t₁) wird als Reaktion auf die Empfangssituationsverschlechterung innerhalb der Wiedergabeverbesserungseinrichtung 40 der Stellwert W (beispielsweise die Gewichtung des Detektors für die Mehrwegeausbreitung) von einer Normaleinstellung W₁ auf eine verschärfte Reaktionsstellung W₂ (höhere Empfindlichkeit auf Signalstörungen) verstellt und verbleibt solange auf dieser verschärften Einstellung bis das Störungssignal (zum Zeitpunkt t₂) die Störungssignalschwelle S₂, welche erfindungsgemäß insbesondere unterhalb der Schwelle S1 liegt, unterschreitet, so dass sich dadurch ein sogenanntes Hystereseverhalten ergibt.

## Patentansprüche

1. Rundfunkempfänger (10) zur Benutzung in einem Fahrzeug zum Empfang von frequenzmodulierten elektromagnetischen Wellen in Form von UKW-Funksignalen mit einer Mehrantennenverarbeitungseinrichtung (30) und mit einer Wiedergabeverbesserungseinrichtung (40), wobei die Mehrantennenverarbeitungseinrichtung (30) zur Bereitstellung eines Mehrantennensignals (31, 31') an die Wiedergabeverbesserungseinrichtung (40) vorgesehen ist, wobei dem Mehrantennensignal (31, 31') wenigstens ein von einer ersten Antenne (21) empfangbares erstes Signal (25) und ein von einer zweiten Antenne (22) empfangbares zweites Signal (27) zugrunde liegend vorgesehen ist, **dadurch gekennzeichnet, dass** zur Bildung eines Ausgangssignals (45) die Wiedergabeverbesserungseinrichtung (40) in Abhängigkeit von ersten Signalqualitätsdaten (32) des Mehrantennensignals (31, 31') und in Abhängigkeit eines Steuersignals (51) adaptiv ausgebildet ist, wobei das Steuersignal (51) ausgehend von zweiten Signalqualitätsdaten (26) des ersten Signals (25) oder ausgehend von dritten Signalqualitätsdaten (28) des zweiten Signals (27) gebildet vorgesehen ist, wobei der Rundfunkempfänger (10) einen Schalter (53) umfasst, wobei mittels des Schalters (53) eine Umschaltung zwischen einer Auswertung des ersten Signals (25) oder des zweiten Signals (27) durch eine Auswerteeinrichtung (50) vorgesehen ist, wobei die Mehrantennenverarbeitungseinrichtung (30) derart konfiguriert ist, dass das erste Signal (25) und das zweite Signal (27) im Sinne eines bestmöglichen Empfangs optimierten Signals unter Auswertung sowohl der Signalanteile des ersten und zweiten Signals (25, 27) als auch unter Auswertung von deren Unterschieden, insbesondere unterschiedliche Phasenlage kombiniert werden.

2. Rundfunkempfänger (10) nach Anspruch 1, **dadurch gekennzeichnet, dass** der Rundfunkempfänger die Auswerteeinrichtung (50) zur Bildung des Steuersignals (51) in Abhängigkeit der zweiten Signalqualitätsdaten (26) oder in Abhängigkeit der dritten Signalqualitätsdaten (28) aufweist.

3. Rundfunkempfänger (10) nach einem der vorhergehenden Ansprüche, **dadurch gekennzeichnet, dass** die ersten Signalqualitätsdaten (32), die zweiten Signalqualitätsdaten (26) und die dritten Signalqualitätsdaten (28) jeweils Qualitätsdaten hinsichtlich der Empfangsfeldstärke und/oder des Modulationshubs und/oder von Nachbarkanalstörungen und/oder von Gleichkanalstörungen und/oder von Mehrwegeempfangsstörungen umfassen.

4. Rundfunkempfänger (10) nach einem der vorhergehenden Ansprüche, **dadurch gekennzeichnet, dass** die Wiedergabeverbesserungseinrichtung (40) eine erste Detektionseinheit (42) zur Detektion der ersten Signalqualitätsdaten (32) aufweist und dass die Auswerteeinrichtung (50) eine zweite Detektionseinheit (52) zur Detektion der zweiten oder dritten Signalqualitätsdaten (26, 28) aufweist.

5. Rundfunkempfänger (10) nach einem der vorhergehenden Ansprüche, **dadurch gekennzeichnet, dass** der Rundfunkempfänger (10) wenigstens einen Analog-DigitalWandler (24, 25) aufweist, so dass das erste und das zweite Signal (25, 27) ein digitalisiertes Signal ist.

6. Verfahren zum Betrieb eines Rundfunkempfängers (10) nach einem der vorhergehenden Ansprüche, **dadurch gekennzeichnet, dass** mittels der Wiedergabeverbesserungseinrichtung (40) das Ausgangssignal (45) durch eine Signalbeeinflussung (44) des Mehrantennensignals (31, 31') gebildet wird.

7. Verfahren nach Anspruch 6, **dadurch gekennzeichnet, dass** die Signalbeeinflussung (44) des Mehrantennensignals (31, 31') in Abhängigkeit eines Auswertesignals (43) der ersten Detektionseinheit (42) geändert wird.

8. Verfahren nach Anspruch 6 oder 7, **dadurch gekennzeichnet, dass** das Auswertesignal (43) der ersten Detektionseinheit (42) in Abhängigkeit des Steuersignals (51) geändert wird.

9. Verfahren nach Anspruch 6, 7 oder 8, **dadurch gekennzeichnet, dass** die Signalbeeinflussung (44) des Mehrantennensignals (31, 31') direkt in Abhängigkeit des Steuersignals (51) geändert wird.

## Claims

1. Broadcast radio receiver (10) for use in a vehicle for receiving frequency-modulated electromagnetic waves in the form of VHF radio signals, having a multiantenna processing device (30) and having a reproduction improvement device (40), wherein the multiantenna processing device (30) is intended to provide a multiantenna signal (31, 31') to the reproduction improvement device (40), wherein at least one first signal (25) receivable by a first antenna (21) and a second signal (27) receivable by a second antenna (22) are provided as a basis for the multiantenna signal (31, 31'), **characterized in that** to form an output signal (45) the reproduction improvement device (40) is designed to be adaptive on the basis of first signal quality data (32) of the multiantenna signal (31, 31') and on the basis of a control signal (51), wherein the control signal (51) is provided in a fashion formed from second signal quality data (26) of the first signal (25) or from third signal quality data (28) of the second signal (27), wherein the broadcast radio receiver (10) comprises a switch (53), wherein the switch (53) is used to provide changeover between evaluation of the first signal (25) or the second signal (27) by an evaluation device (50), wherein the multiantenna processing device (30) is configured such that the first signal (25) and the second signal (27) are combined to produce a signal optimized for best possible reception both by evaluating the signal components of the first and second signals (25, 27) and by evaluating the differences, in particular the different phases, thereof.

2. Broadcast radio receiver (10) according to Claim 1, **characterized in that** the broadcast radio receiver has the evaluation device (50) for forming the control signal (51) on the basis of the second signal quality data (26) or on the basis of the third signal quality data (28).

3. Broadcast radio receiver (10) according to either of the preceding claims, **characterized in that** the first signal quality data (32), the second signal quality data (26) and the third signal quality data (28) each comprise quality data for the reception field strength and/or for the modulation swing and/or from adjacent channel interference and/or from co-channel interference and/or from multipath reception interference.

4. Broadcast radio receiver (10) according to one of the preceding claims, **characterized in that** the reproduction improvement device (40) has a first detection unit (42) for detecting the first signal quality data (32) and **in that** the evaluation device (50) has a second detection unit (52) for detecting the second or third signal quality data (26, 28).

5. Broadcast radio receiver (10) according to one of the preceding claims, **characterized in that** the broadcast radio receiver (10) has at least one analogue-to-digital converter (24, 25), so that the first and second signals (25, 27) are a digitized signal.

6. Method for operating a broadcast radio receiver (10) according to one of the preceding claims, **characterized in that** the reproduction improvement device (40) is used to form the output signal (45) by means of signal influencing (44) of the multiantenna signal (31, 31').

7. Method according to Claim 6, **characterized in that** the signal influencing (44) of the multiantenna signal (31, 31') is changed on the basis of an evaluation signal (43) of the first detection unit (42).

8. Method according to Claim 6 or 7, **characterized in that** the evaluation signal (43) of the first detection unit (42) is changed on the basis of the control signal (51).

9. Method according to Claim 6, 7 or 8, **characterized in that** the signal influencing (44) of the multiantenna signal (31, 31') is changed directly on the basis of the control signal (51).

## Revendications

1. Récepteur radio (10) destiné à être utilisé dans un véhicule pour recevoir des ondes électromagnétiques modulées en fréquence sous la forme de signaux radio VHF, comprenant un dispositif de traitement multi-antenne (30) et un dispositif d'amélioration de la restitution (40), dans lequel le dispositif de traitement multi-antenne (30) est prévu pour fournir un signal multi-antenne (31, 31') au dispositif d'amélioration de la restitution (40), dans lequel le signal multi-antenne (31, 31') est basé sur au moins un premier signal (25) pouvant être reçu par une première antenne (21) et un deuxième signal (27) pouvant être reçu par une deuxième antenne (22), **caractérisé en ce que**, pour produire un signal de sortie (45), le dispositif d'amélioration de la restitution (40) est réalisé de manière adaptative en fonction de premières données de qualité de signal (32) du signal multi-antenne (31, 31') et en fonction d'un signal de commande (51), dans lequel le signal de commande (51) est réalisé à partir de deuxièmes données de qualité de signal (26) du premier signal (25) ou à partir de troisièmes données de qualité de signal (28) du deuxième signal (27), dans lequel le récepteur radio (10) comprend un commutateur (53), dans lequel le commutateur (53) permet un basculement entre une évaluation du premier signal (25) et une évaluation du deuxième signal (27) par un dispositif d'évaluation (50), dans lequel le dispositif de traitement multi-antenne (30) est configuré de manière à ce que le premier signal (25) et le deuxième signal (27) soient combinés pour fournir la meilleure réception possible d'un signal optimisé en évaluant à la fois les composantes de signal des premier et deuxième signaux (25, 27) et en évaluant leurs différences, en particulier les différentes positions de phase.

2. Récepteur radio (10) selon la revendication 1, **caractérisé en ce que** le récepteur radio comporte le dispositif d'évaluation (50) destiné à produire le signal de commande (51) en fonction des deuxièmes données de qualité de signal (26) ou en fonction des troisièmes données de qualité de signal (28).

3. Récepteur radio (10) selon l'une des revendications précédentes, **caractérisé en ce que** les premières données de qualité de signal (32), les deuxièmes données de qualité de signal (26) et les troisièmes données de qualité de signal (28) comprennent respectivement des données de qualité concernant l'intensité de champ reçue et/ou l'amplitude de modulation et/ou les brouillages entre canaux adjacents et/ou les brouillages dans le canal et/ou les brouillages par réception multi-trajets.

4. Récepteur radio (10) selon l'une des revendications précédentes, **caractérisé en ce que** le dispositif d'amélioration de la restitution (40) comporte une première unité de détection (42) destinée à détecter les premières données de qualité de signal (32) et **en ce que** le dispositif d'évaluation (50) comporte une deuxième unité de détection (52) destinée à détecter les deuxièmes ou troisièmes données de qualité de signal (26, 28).

5. Récepteur radio (10) selon l'une des revendications précédentes, **caractérisé en ce que** le récepteur radio (10) comprend au moins un convertisseur analogique-numérique (24, 25), de manière à ce que les premier et deuxième signaux (25, 27) soient des signaux numérisés.

6. Procédé de mise en fonctionnement d'un récepteur radio (10) selon l'une des revendications précédentes, **caractérisé en ce que** le signal de sortie (45) est formé au moyen du dispositif d'amélioration de la reproduction (40) par un effet de signal (44) sur le signal multi-antenne (31, 31').

7. Procédé selon la revendication 6, **caractérisé en ce que** l'effet de signal (44) sur le signal multi-antenne (31, 31') est modifié en fonction d'un signal d'évaluation (43) de la première unité de détection (42).

8. Procédé selon la revendication 6 ou 7, **caractérisé en ce que** le signal d'évaluation (43) de la première unité de détection (42) est modifié en fonction du signal de commande (51).

9. Procédé selon la revendication 6, 7 ou 8, **caractérisé en ce que** l'effet de signal (44) sur le signal multi-antenne (31, 31') est modifié directement en fonction du signal de commande (51).
